(19) Europäisches Patentamt
European Patent Office
Office européen des brevets

(11) **EP 4 273 969 A1**

(12) **EUROPEAN PATENT APPLICATION**
published in accordance with Art. 153(4) EPC


(43) Date of publication:
**08.11.2023 Bulletin 2023/45**

(21) Application number: **23723398.6**

(22) Date of filing: **10.03.2023**

(51) International Patent Classification (IPC):
***H01M 4/62*** *(2006.01)* ***H01M 4/485*** *(2010.01)*

(52) Cooperative Patent Classification (CPC):
Y02E 60/10

(86) International application number:
**PCT/CN2023/080935**

(87) International publication number:
**WO 2023/179384 (28.09.2023 Gazette 2023/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.03.2022 CN 202210284289**



(71) Applicant: **Shenzhen Capchem Technology Co., Ltd**
**Shenzhen, Guangdong 518118 (CN)**

(72) Inventor: **The designation of the inventor has not yet been filed**

(74) Representative: **Predazzi, Valentina et al**
**Società Italiana Brevetti S.p.A.**
**Piazza di Pietra, 39**
**00186 Roma (IT)**


(54) **POSITIVE ELECTRODE PLATE AND LITHIUM ION BATTERY**


(57) The present disclosure provides a positive electrode sheet including a positive electrode current collector and a positive electrode material layer formed on the positive electrode current collector. The positive electrode sheet has a potential range of greater than or equal to 4.25 V with respect to metal lithium. The positive electrode material layer includes a positive electrode active material doped or coated with metal elements and a compound represented by formula I. The positive electrode sheet satisfies following conditions: $0.3 \leq \frac{(m+n)}{100k} \leq 59$; and $50 \leq m \leq 10000$, $50 \leq n \leq 10000$, $2.8 \leq k \leq 3.8$; where m is a content of the compound represented by the formula I in the positive electrode material layer; n is a total content of the metal elements doped and coated in the positive electrode material layer; and k is a compacted density of the positive electrode material layer. A solution obtained after ultrasonically shaking the positive electrode sheet in a solvent is subjected to a liquid chromatography-mass spectrometer (LC-MS) analysis, and a characteristic peak appears in a region having a retention time of 6.5 min to 7.5 min.

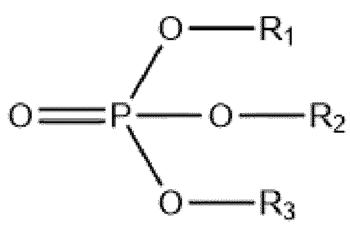

Formula I


EP 4 273 969 A1

## Description

### FIELD

The present disclosure generally relates to a technical field of energy storage electronics, and more particularly to a positive electrode sheet and a lithium-ion battery.

### BACKGROUND

Lithium-ion batteries have been widely used as power sources in life due to their irreplaceable advantages of a low self-discharge rate, a long cycle life, a high operating voltage, a low pollution and so on. The lithium-ion batteries have broad prospects in mobile communications, notebook computers, new energy vehicles and so on. At the same time, users also make requirements for the lithium-ion batteries, such as a high energy density, a fast charging and so on.

In the lithium-ion battery system, in order to improve the energy density of the battery, the industry continues to improve the operating voltage of the battery. When the voltage of the lithium battery is greater than or equal to 4.25 V, the decomposition of an electrolyte is aggravated and byproducts are increased. Therefore, after being cycled or stored at a high temperature, the battery will suffer from problems of a gas generation, a capacity degradation and a continuous increase in a direct current impedance, resulting in a decrease in power performance of the battery. The existing methods to improve the cycling performance of the battery are mainly to add an electrolyte additive to a non-aqueous electrolyte. The existing electrolyte additive can improve the high-temperature cycling of a high-voltage battery, the problem of the gas expansion after storage and the problem of capacity degradation to a certain extent, but the problem of excessive increase in the direct current impedance still needs to be solved.

### SUMMARY

With regard to the problems of insufficient high-temperature cycling performance and increased impedance of the existing lithium-ion battery, the present disclosure provides a positive electrode sheet and a lithium-ion battery.

The technical solution used in the present disclosure to solve the above-mentioned technical problem is as follows:

In a first aspect, the present disclosure provides a positive electrode sheet, including: a positive electrode current collector and a positive electrode material layer formed on the positive electrode current collector. The positive electrode sheet has a potential range of greater than or equal to 4.25 V with respect to metal lithium, and the positive electrode material layer includes a positive electrode active material doped or coated with metal elements and a compound represented by formula I:

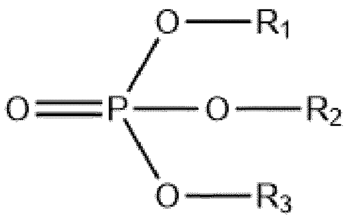

Formula I

where $R_1$, $R_2$, and $R_3$ are each independently selected from an alkyl group of 1 to 5 carbon atoms, a fluoroalkyl group of 1 to 5 carbon atoms, an ether group of 1 to 5 carbon atoms, a fluoroether group of 1 to 5 carbon atoms, an unsaturated hydrocarbonyl group of 2 to 5 carbon atoms, and at least one of $R_1$, $R_2$, and $R_3$ is the unsaturated hydrocarbonyl group of 2 to 5 carbon atoms;

in which the positive electrode sheet satisfies following conditions:

$$0.3 \le \frac{(m+n)}{100k} \le 59;$$

and

$$50 \leq m \leq 10000,\ 50 \leq n \leq 10000,\ 2.8 \leq k \leq 3.8;$$

where m is a content of the compound represented by the formula I in the positive electrode material layer, in a unit of ppm;
n is a total content of the metal elements doped and coated in the positive electrode material layer, in a unit of ppm; and
k is a compacted density of the positive electrode material layer, in a unit of g/cm$^3$;
in which a solution obtained after ultrasonically shaking the positive electrode sheet in a solvent is subjected to a liquid chromatography-mass spectrometer (LC-MS) analysis, and a characteristic peak appears in a region having a retention time of 6.5 min to 7.5 min.

Alternatively, the positive electrode sheet satisfies a following condition:

$$0.6 \leq \frac{(m+n)}{100k} \leq 25.$$

Alternatively, the positive electrode active material is selected from a compound represented by formula (1) and/or formula (2):

$Li_{1+x}Ni_aCo_bM^1_cM^2_{1-a-b-c}O_{2-y}A_y$ Formula (1)

$Li_{1+z}Mn_eL_{2-e}O_{4-d}B_d$ Formula (2)

where in the formula (1), $-0.1 \leq x \leq 0.2$, $0 < a < 1$,$0 < b < 0.3$, $0 < c < 0.3$, $0<a + b + c < 1$,$0 \leq y < 0.2$, $M^1$ includes one or two of Mn and Al, $M^2$ is a doped and/or coated metal element, $M^2$ includes one or more of W, Mg, Ti, Ca, Zr, Zn, Si, Fe and Ce, A is a doped and/or coated non-metal element, and A includes one or more of S, N, F, Cl, Br and I; in the formula (2), $-0.1 \leq z \leq 0.2$, $0 < e < 2$, $0 \leq d < 1$, L is a doped and/or coated metal element, L includes one or more of Ni, W, Mg, Ti, Ca, Zr, Zn, Si, Fe and Ce, B is a doped and/or coated non-metal element, and B includes one or more of S, N, F, Cl, Br, and I.

Alternatively, the content m of the compound represented by the formula I in the positive electrode material layer is from 50 ppm to 5000 ppm.
Alternatively, the total content n of the metal elements doped and coated in the positive electrode material layer is from 100 ppm to 3000 ppm.
Alternatively, the compacted density k of the positive electrode material layer is from 3.0 to 3.6 g/cm$^3$.
Alternatively, a thickness of the positive electrode material layer on one side of the positive electrode current collector is from 80 to 200μm, and a one-side areal density of the positive electrode material layer is from 15 to 30 mg/cm$^2$.
Alternatively, the alkyl group of 1 to 5 carbon atoms is selected from methyl, ethyl, n-propyl, isopropyl, n-butyl, isobutyl, sec-butyl, tert-butyl, n-pentyl, isopentyl, sec-pentyl, or neopentyl; the fluoroalkyl group of 1 to 5 carbon atoms is selected from a group obtained by substituting one or more hydrogen elements in the alkyl group of 1 to 5 carbon atoms with fluorine elements. The unsaturated hydrocarbonyl group of 2 to 5 carbon atoms is selected from vinyl, propenyl, allyl, butenyl, pentenyl, methyl vinyl, methyl allyl, ethynyl, propynyl, propargyl, butynyl, or pentynyl. The ether group of 1 to 5 carbon atoms is selected from methyl ether, ethyl ether, methyl ethyl ether, propyl ether, methyl propyl ether, or ethyl propyl ether. The fluoroether group of 1 to 5 carbon atoms is selected from fluoromethyl ether, fluoroethyl ether, fluoromethyl ethyl ether, fluoropropyl ether, fluoromethyl propyl ether, and fluoroethyl propyl ether.
Alternatively, the compound represented by the formula I is selected from at least one of tripropargyl phosphate, dipropargyl methyl phosphate, dipropargyl fluoromethyl phosphate, dipropargyl methoxymethyl phosphate, dipropargyl ethyl phosphate, dipropargyl propyl phosphate, trifluoromethyl dipropargyl phosphate, dipropargyl 2,2,2-trifluoroethyl phosphate, dipropargyl 3,3,3-trifluoropropyl phosphate, hexafluoroisopropyl dipropargyl phosphate, triallyl phosphate, diallyl methyl phosphate, diallyl ethyl phosphate, diallyl propyl phosphate, trifluoromethyl diallyl phosphate, dipropargyl methyl ether phosphate, dipropargyl fluoromethyl ether phosphate, diallyl 2,2,2-trifluoroethyl phosphate, diallyl 3,3,3-trifluoropropyl phosphate, or diallyl hexafluoroisopropyl phosphate.
In a second aspect, the present disclosure provides a lithium-ion battery, including: a negative electrode sheet, a non-aqueous electrolyte, and the above-mentioned positive electrode sheet.
According to the positive electrode sheet provided in the present disclosure, the compound represented by the formula I is added into the positive electrode material layer. At the same time, the relationship between the content m

of the compound represented by the formula I in the positive electrode material layer, the total content n of the doped and coated metal elements in the positive electrode material layer, and the compacted density k of the positive electrode material layer is rationally designed. When the positive electrode material layer satisfies the condition $0.3 \le \frac{(m+n)}{100k} \le 59$, the synergistic effect of the compound represented by the formula I with the doped elements of the positive electrode active material and the positive electrode compacted density can be exerted sufficiently, so that the positive electrode active material has a high structural stability. Therefore, side reactions between the surface of the positive electrode material layer and the non-aqueous electrolyte are significantly reduced in the battery, and the increase in the positive electrode impedance during the high-temperature cycling/storage is reduced, in particular, the high-temperature performance of the battery is greatly improved.

## BRIEF DESCRIPTION OF THE DRAWINGS

FIG. 1 is a chromatogram of a positive electrode sheet provided in the present disclosure subjected to a liquid chromatography-mass spectrometer analysis.

## DETAILED DESCRIPTION

In order that the technical problems, technical solutions and advantageous effects to be solved by the present disclosure can be more clearly understood, the present disclosure will be described in further detail with reference to the accompanying drawings and the embodiments. It should be understood that the particular embodiments described herein are only used to explain the present disclosure, but are not intended to limit the present disclosure.

The embodiments of the present disclosure provide a positive electrode sheet including a positive electrode current collector and a positive electrode material layer formed on the positive electrode current collector, in which the positive electrode sheet has a potential range of greater than or equal to 4.25 V with respect to metal lithium, and the positive electrode material layer includes a positive electrode active material doped or coated with metal elements and a compound represented by formula I:

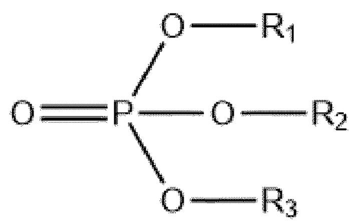

Formula I

where $R_1$, $R_2$, and $R_3$ are each independently selected from an alkyl group of 1 to 5 carbon atoms, a fluoroalkyl group of 1 to 5 carbon atoms, an ether group of 1 to 5 carbon atoms, a fluoroether group of 1 to 5 carbon atoms, an unsaturated hydrocarbonyl group of 2 to 5 carbon atoms, and at least one of $R_1$, $R_2$, and $R_3$ is the unsaturated hydrocarbonyl group of 2 to 5 carbon atoms;

in which the positive electrode sheet satisfies following conditions:

$$0.3 \le \frac{(m+n)}{100k} \le 59;$$

and

$$50 \le m \le 10000,\ 50 \le n \le 10000,\ 2.8 \le k \le 3.8;$$

where m is a content of the compound represented by the formula I in the positive electrode material layer, in a unit of ppm;

n is a total content of the metal elements doped and coated in the positive electrode material layer, in a unit of ppm;

k is a compacted density of the positive electrode material layer, in a unit of g/cm$^3$;

in which a solution obtained after ultrasonically shaking the positive electrode sheet in a solvent is subjected to a liquid chromatography-mass spectrometer (LC-MS) analysis, and a characteristic peak appears in a region having a retention time of 6.5 min to 7.5 min.

The method of performing the liquid chromatography-mass spectrometer chromatographic analysis on the positive electrode sheet is as follows: the battery is disassembled in a glove box and the positive electrode sheet is taken out. Then, the cut positive electrode sheet is immersed in a suitable solvent (such as DMC, or acetonitrile), and subjected to ultrasonic vibration for a suitable time to dissolve the substance in the positive electrode material layer of the positive electrode sheet into the solvent. Then, the solution is detected by the liquid chromatography-mass spectrometer (LC-MS), and has a characteristic peak in a region of a retention time of 6.5 min to 7.5 min, as shown in FIG. 1. The model of the liquid chromatography-mass spectrometer is Waters ACQUITY UPLC/Xevo G2-XS Qtof MS. The chromatographic conditions are as follows: a Waters T3 type chromatographic column is used, the column temperature is from 35 to 40 °C, a mobile phase is a mixture of 40% water and 60% acetonitrile, and the flow rate of the mobile phase is from 0.2 to 0.3 mL/min.

In some embodiments, the duration of ultrasonic vibration of the positive electrode sheet in the solvent is 2 hours or more.

In the present disclosure, the alkyl group of 1 to 5 carbon atoms can be selected from, for example, methyl, ethyl, n-propyl, isopropyl, n-butyl, isobutyl, sec-butyl, tert-butyl, n-pentyl, isopentyl, sec-pentyl, or neopentyl. The fluoroalkyl group of 1 to 5 carbon atoms is selected from a group obtained by substituting one or more hydrogen elements in the alkyl group of 1 to 5 carbon atoms (such as the above-mentioned groups) with fluorine elements.

The unsaturated hydrocarbonyl group of 2 to 5 carbon atoms can be selected from, for example, vinyl, propenyl, allyl, butenyl, pentenyl, methyl vinyl, methyl allyl, ethynyl, propynyl, propargyl, butynyl, or pentynyl.

The ether group of 1 to 5 carbon atoms can be selected from, for example, methyl ether, ethyl ether, methyl ethyl ether, propyl ether, methyl propyl ether, or ethyl propyl ether.

The fluoroether group of 1 to 5 carbon atoms can be selected from, for example, fluoromethyl ether, fluoroethyl ether, fluoromethyl ethyl ether, fluoropropyl ether, fluoromethyl propyl ether, or fluoroethyl propyl ether.

The compound represented by the formula I is added into the positive electrode material layer. At the same time, the relationship between the mass percent content m of the compound represented by the formula I in the positive electrode material layer, the total content n of metal elements doped in and/or coated on the positive electrode material in the positive electrode active layer, and the compacted density k of the positive electrode material layer is rationally designed.

When the positive electrode material layer satisfies the condition $0.3 \le \frac{(m+n)}{100k} \le 59$, the synergistic effect of the compound represented by the formula I with the doped elements of the positive electrode active material and the positive electrode compacted density can be exerted sufficiently, so that the positive electrode active material has a high structural stability. Therefore, side reactions between the surface of the positive electrode material layer and the non-aqueous electrolyte are significantly reduced in the battery, and the increase in the positive electrode impedance during the high-temperature cycling/storage is reduced, in particular, the high-temperature performance of the battery is greatly improved.

In preferred embodiments, the positive electrode sheet satisfies a following condition:

$$0.6 \le \frac{(m+n)}{100k} \le 25.$$

When the content m of the compound represented by the formula I in the positive electrode material layer, the total content n of the doped and coated metal elements in the positive electrode material layer, and the compacted density k of the positive electrode material layer satisfy the above condition, it is beneficial to further reduction in the impedance increase of the battery and improve the high-temperature cycling performance of the battery.

In some embodiments, the positive electrode active material is selected from a compound represented by formula (1) and/or formula (2):

$Li_{1+x}Ni_aCo_bM^1{}_cM^2{}_{1-a-b-c}O_{2-y}A_y$ Formula (1)

$Li_{1+z}Mn_eL_{2-e}O_{4-d}B_d$ Formula (2)

where in the formula (1), $-0.1 \leq x \leq 0.2$, $0 < a < 1$, $0 < b < 0.3$, $0 < c < 0.3$, $0<a + b + c < 1$, $0 \leq y < 0.2$, $M^1$ includes one or two of Mn and Al, $M^2$ is a doped and/or coated metal element, $M^2$ includes one or more of W, Mg, Ti, Ca, Zr, Zn, Si, Fe and Ce, A is a doped and/or coated non-metal element, and A includes one or more of S, N, F, Cl, Br and I; in the formula (2), $-0.1 \leq z \leq 0.2$, $0 < e < 2$, $0 \leq d < 1$, L is a doped and/or coated metal element, L includes one or more of Ni, W, Mg, Ti, Ca, Zr, Zn, Si, Fe and Ce, B is a doped and/or coated non-metal element, and B includes one or more of S, N, F, Cl, Br, and I.

In specific embodiments, the positive electrode active material includes a positive electrode active material matrix and doped and/or coated metal elements, in which the positive electrode active material matrix includes at least one of $LiNi_{0.5}Co_{0.2}Mn_{0.3}O_2$, $LiNi_{0.6}Co_{0.2}Mn_{0.2}O_2$, $LiNi_{0.7}Co_{0.1}Mn_{0.2}O_2$, $LiNi_{0.8}Co_{0.1}Mn_{0.1}O_2$, and $LiMn_2O_4$, and the doped and/or coated metal elements include one or more of W, Mg, Ti, Ca, Zr, Zn, Si, Fe, and Ce.

In specific embodiments, the positive electrode active material matrix is $LiNi_{0.5}Co_{0.2}Mn_{0.3}O_2$, and the potential range of the positive electrode sheet relative to metal lithium is greater than or equal to 4.35 V.

In specific embodiments, the positive electrode active material matrix is $LiNi_{0.6}Co_{0.2}Mn_{0.2}O_2$, and the potential range of the positive electrode sheet relative to metal lithium is greater than or equal to 4.35 V.

In specific embodiments, the positive electrode active material matrix is $LiNi_{0.7}Co_{0.1}Mn_{0.2}O_2$, and the potential range of the positive electrode sheet relative to metal lithium is greater than or equal to 4.30 V.

In specific embodiments, the positive electrode active material matrix is $LiNi_{0.8}Co_{0.1}Mn_{0.1}O_2$, and the potential range of the positive electrode sheet relative to metal lithium is greater than or equal to 4.25 V In specific embodiments, the positive electrode active material matrix is $LiMn_2O_4$, and the potential range of the positive electrode sheet relative to metal lithium is greater than or equal to 4.35 V.

In embodiments of the present disclosure, the content m of the compound represented by the formula I in the positive electrode material layer is in a range of 50 ppm to 10000 ppm. In specific embodiments, the content m of the compound represented by the formula I in the positive electrode material layer can be 50 ppm, 60 ppm, 80 ppm, 90 ppm, 100 ppm, 150 ppm, 200 ppm, 300 ppm, 400 ppm, 500 ppm, 700 ppm, 900 ppm, 1000 ppm, 1500 ppm, 2000 ppm, 3000 ppm, 4000 ppm, 5000 ppm, 6000 ppm, 7000 ppm, 8000 ppm, 9000 ppm or 10000 ppm.

In preferred embodiments, the content m of the compound represented by the formula I in the positive electrode material layer is from 50 ppm to 5000 ppm.

The compound represented by the formula I participates in the formation of a passivation film on the surface of the positive electrode active material, which is beneficial to avoidance of a direct contact between the positive electrode material layer and the non-aqueous electrolyte, reduction in a decomposition reaction of the non-aqueous electrolyte on the positive electrode material layer, and improvement of the stability of the positive electrode active material and the stability of the battery at a high temperature. In the positive electrode material layer, if the content of the compound represented by the formula I is too small, then its passivation effect on the positive electrode material is limited, so that the effect of improving the high-temperature performance of the battery is not apparent; otherwise, if the content of the compound represented by the formula I is too large, then the film formed on the surface of the positive electrode active material is thicker, and the internal resistance of the battery is greater.

In embodiments of the present disclosure, the total content n of the metal elements doped and coated in the positive electrode material layer is from 50 ppm to 10000 ppm. In specific embodiments, the total content n of the metal elements doped and coated in the positive electrode material layer can be 50 ppm, 60 ppm, 80 ppm, 90 ppm, 100 ppm, 150 ppm, 200 ppm, 300 ppm, 400 ppm, 500 ppm, 700 ppm, 900 ppm, 1000 ppm, 1500 ppm, 2000 ppm, 3000 ppm, 4000 ppm, 5000 ppm, 6000 ppm, 7000 ppm, 8000 ppm, 9000 ppm or 10000 ppm.

In preferred embodiments, the total content n of the metal elements doped and coated in the positive electrode material layer is from 100 ppm to 3000 ppm.

By doping or coating metal elements in the positive electrode material layer, it is beneficial to improvement of the stability of the positive electrode active material. Specifically, a nickel-cobalt-manganese ternary material, a nickel-cobalt-aluminum ternary material or lithium manganate can be used as the positive electrode active material matrix. The positive electrode active material matrix is doped or coated to obtain the positive electrode active material. When the doping process is performed, the metal elements are embedded in a lattice of the positive electrode active material matrix to replace part of cobalt, nickel, manganese or aluminum position to form a stable doped state and suppress the dissolution of metal ions. When the coating process is performed, the metal elements are coated on the outer surface of the positive electrode active material in the form of an oxide or a metal salt, to avoid direct contact between the positive electrode active material and the non-aqueous electrolyte. The higher the content of doped or coated metal elements in the positive electrode material, the better the structural stability of the positive electrode material and the better the high-temperature storage performance. However, when the content of the doped or coated metal elements is too large, the impedance of the material will increase.

In embodiments of the present disclosure, the compacted density k of the positive electrode material layer is from 2.8 to 3.8 $g/cm^3$. In specific embodiments, the compacted density k of the positive electrode material layer is 2.8

g/cm$^3$, 2.9 g/cm$^3$, 3.0 g/cm$^3$, 3.1 g/cm$^3$, 3.2 g/cm$^3$, 3.3 g/cm$^3$, 3.4 g/cm$^3$, 3.5 g/cm$^3$, 3.6 g/cm$^3$, 3.7 g/cm$^3$ or 3.8 g/cm$^3$.

In preferred embodiments, the compacted density k of the positive electrode material layer is from 3.0 to 3.6 g/cm$^3$.

The compacted density of the positive electrode material layer is related to its porosity. Within a certain range, the smaller the compacted density, the more developed its pore structure, the more benefited the liquid phase conduction of active ions, and the better the high-temperature performance. However, if the compacted density of the positive electrode material layer is too small, it will cause electrode powders to fall off, and if the compacted density is too high, it will lead to poor electrolyte infiltration and poor high-temperature performance.

In some embodiments, a thickness of the positive electrode material layer on one side of the positive electrode current collector is from 80 to 200 μm.

In preferred embodiments, the thickness of the positive electrode material layer on one side of the positive electrode current collector is from 100 to 150 μm.

The thickness of the positive electrode material layer on one side of the positive electrode current collector is also a key technical parameter in the design and manufacture of the lithium-ion battery. Under the same electrode size, the greater the thickness of the positive electrode material layer on one side of the positive electrode current collector, the higher the energy density of the battery, but the internal resistance will further increase. While the thickness of the positive electrode material layer on one side of the positive electrode current collector decreases, the energy density of the battery decreases, which is not conducive to commercial applications.

In some embodiments, a one-side areal density of the positive electrode material layer is from 15 to 30 mg/cm$^2$.

In some embodiments, the particle diameter D50 of the positive electrode active material is from 1 to 30 μm.

In some embodiments, the compound represented by the formula I is selected from at least one of tripropargyl phosphate, dipropargyl methyl phosphate, dipropargyl fluoromethyl phosphate, dipropargyl methoxymethyl phosphate, dipropargyl ethyl phosphate, dipropargyl propyl phosphate, trifluoromethyl dipropargyl phosphate, dipropargyl 2,2,2-trifluoroethyl phosphate, dipropargyl 3,3,3-trifluoropropyl phosphate, hexafluoroisopropyl dipropargyl phosphate, triallyl phosphate, diallyl methyl phosphate, diallyl ethyl phosphate, diallyl propyl phosphate, trifluoromethyl diallyl phosphate, dipropargyl methyl ether phosphate, dipropargyl fluoromethyl ether phosphate, 2,2,2-trifluoroethyl diallyl phosphate, diallyl 3,3,3-trifluoropropyl phosphate, or diallyl hexafluoroisopropyl phosphate.

In preferred embodiments, the compound represented by the formula I is selected from one or more of following compounds:

| Compound 1 | Compound 2 | Compound 3 |
|---|---|---|
| 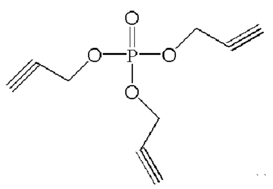 | 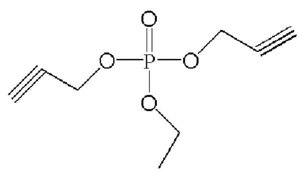 | 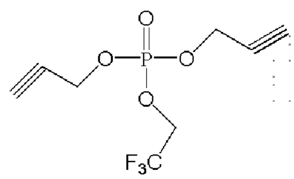 |
| Compound 4 | Compound 5 | Compound 6 |
| 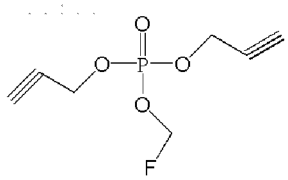 | 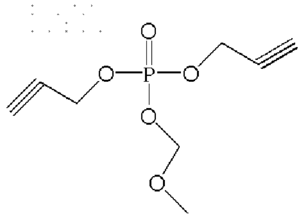 | 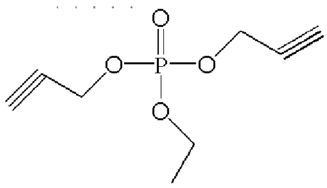 |

In some embodiments, the positive electrode material layer further includes a positive electrode binder and a positive electrode conductive agent. The positive electrode active material, the compound represented by the formula I, the positive electrode binder and the positive electrode conductive agent are blended to obtain the positive electrode material layer.

With a total mass of the positive electrode material layer being 100%, a mass percent content of the positive electrode binder is from 1 to 2%, and a mass percent content of the positive electrode conductive agent is from 0.5 to 2%.

The positive electrode binder includes one or more of thermoplastic resins such as polyvinylidene fluoride, vinylidene fluoride copolymers, polytetrafluoroethylene, vinylidene fluoride-hexafluoropropylene copolymers, tetrafluoroethylene-hexafluoropropylene copolymers, tetrafluoroethylene-perfluoroalkyl vinyl ether copolymers, ethylene-tetrafluoroethylene copolymers, vinylidene fluoride-tetrafluoroethylene copolymers, vinylidene fluoride-trifluoroethylene copolymers, vinylidene fluoride-trichloroethylene copolymers, vinylidene fluoride-fluoroethylene copolymers, vinylidene fluoride-hexafluoropropylene-tetrafluoroethylene copolymers, thermoplastic polyimides, polyethylene and polypropylene and so on; acrylic resins; sodium carboxymethyl cellulose; polyvinyl butyral; ethylene-vinyl acetate copolymers; polyvinyl alcohol; and styrene butadiene rubbers.

The positive electrode conductive agent includes one or more of conductive carbon black, conductive carbon spheres, conductive graphite, conductive carbon fibers, carbon nanotubes, graphene or reduced graphene oxide.

In some embodiments, the compound represented by the formula I is formed on the surface of the positive electrode material layer, or the compound represented by the formula I is mixed in the interior of the positive electrode material layer.

When the compound represented by the formula I is formed on the surface of the positive electrode material layer, its preparation method can be a method as follows:

A coating containing the compound represented by the formula I is formed on a surface of the positive electrode material layer by means of surface coating. Specifically, the positive electrode active material, the positive electrode conductive agent and the positive electrode binder can be dispersed in an organic solvent firstly, preparing a positive electrode slurry. The positive electrode slurry is coated and dried to form the positive electrode material layer. Then, the compound represented by the formula I is dispersed in an organic solvent, and the obtained solution of the compound represented by the formula I is sprayed on the surface of the positive electrode material layer. After drying it to remove the solvent, the positive electrode material layer including the compound represented by the formula I is obtained.

When the compound represented by the formula I is mixed in the interior of the positive electrode material layer, its preparation method can be a method as follows:

(1) A positive electrode slurry for preparing the positive electrode material layer contains the compound represented by the formula I. Specifically, the compound represented by the formula I, the positive electrode active material, the positive electrode conductive agent and the positive electrode binder can be dispersed in an organic solvent, preparing the positive electrode slurry. Then, the positive electrode slurry is coated and dried to form the positive electrode material layer.

(2) After preparing the positive electrode material layer, the positive electrode material layer is soaked in a solution containing the compound represented by the formula I, so that the compound represented by the formula I penetrates into the interior of the positive electrode material layer. After drying it to remove the solvent, the positive electrode material layer including the compound represented by the formula I is obtained.

In some embodiments, the positive electrode current collector is selected from metal materials that can conduct electrons. Preferably, the positive electrode current collector includes one or more of Al, Ni, tin, copper, and stainless steel. In more preferred embodiments, the positive current collector is selected from aluminum foil.

Another embodiment of the present disclosure provides a lithium-ion battery including a negative electrode sheet, a non-aqueous electrolyte, and the above-mentioned positive electrode sheet.

In some embodiments, the non-aqueous electrolyte includes a non-aqueous organic solvent, and the non-aqueous organic solvent includes one or more of an ether solvent, a nitrile solvent, a carbonate solvent, and a carboxylate solvent.

In some embodiments, the ether solvent includes cyclic ethers or linear ethers, preferably linear ethers with 3 to 10 carbon atoms and cyclic ethers with 3 to 6 carbon atoms. The cyclic ethers can specifically be, but are not limited to, one or more of 1,3-dioxolane (DOL), 1,4-dioxane (DX), crown ethers, tetrahydrofuran (THF), 2-methyl tetrahydrofuran (2-$CH_3$-THF), and 2-trifluoromethyl tetrahydrofuran (2-$CF_3$-THF); and the linear ethers can specifically be, but are not limited to, dimethoxymethane, diethoxymethane, ethoxymethoxymethane, ethylene glycol di-n-propyl ether, ethylene glycol di-n-butyl ether, and diethylene glycol dimethyl ether. Dimethoxymethane, diethoxymethane, and ethoxymethoxymethane, which are low in viscosity and impart high ion conductivity, are particularly preferred because the solvation ability of linear ethers with lithium ions is high and ion dissociation can be improved. One kind of ether compound may be used alone, or two or more kinds of ether compounds may be used in any combination and ratio. The addition amount of the ether compounds is not particularly limited, and it is arbitrary within a range of not significantly destroying the effect of the high-compacted lithium-ion battery in the present disclosure. The addition amount of the ether compounds is usually 1% or more by volume, preferably 2% or more by volume, more preferably 3% or more by volume, in addition, usually 30% or less by volume, preferably 25% or less by volume, more preferably 20% or less by volume of the ether compounds in the non-aqueous solvent of 100% by volume. When two or more ether compounds are used in combination, the total amount of the ether compounds needs to satisfy the above ranges. When the addition amount of the ether compounds is within the above-mentioned preferred ranges, it is easy to ensure the effect of improving the ion conductivity by increasing the lithium-ion dissociation degree of the chain ethers and reducing the viscosity. In addition, when the negative electrode active material is a carbon material, co-intercalation of the chain ethers and lithium ions can be

suppressed, so that input-output characteristics and charge-discharge rate characteristics can be brought into appropriate ranges.

In some embodiments, the nitrile solvent may specifically be, but is not limited to, one or more of acetonitrile, glutaronitrile, and malononitrile.

In some embodiments, the carbonate solvent includes cyclic carbonates or linear carbonates, the cyclic carbonates can specifically be, but are not limited to, one or more of ethylene carbonate (EC), propylene carbonate (PC), γ-butyrolactone (GBL), and butylene carbonate (BC); and the linear carbonates can specifically be, but are not limited to, one or more of dimethyl carbonate (DMC), ethyl methyl carbonate (EMC), diethyl carbonate (DEC), and dipropyl carbonate (DPC). The content of the cyclic carbonates is not particularly limited, and it is arbitrary within a range of not significantly destroying the effect of the lithium-ion battery in the present disclosure. However, in the case of using one kind of cyclic carbonate alone, the lower limit of the content of the cyclic carbonates is usually 3% or more by volume, and preferably 5% or more by volume, relative to the total amount of the solvent in the non-aqueous electrolyte. By setting this range, it is possible to avoid a decrease in conductivity due to a decrease in the dielectric constant of the non-aqueous electrolyte, and it is easy to make the large-current discharge characteristics, stability with respect to the negative electrode, and cycle characteristics of the non-aqueous electrolyte battery reach good ranges. In addition, the upper limit is usually 90% or less by volume, preferably 85% or less by volume, and more preferably 80% or less by volume. By setting this range, the oxidation/reduction resistance of the non-aqueous electrolyte can be improved, thereby contributing to the improvement of the stability during high-temperature storage. The content of the linear carbonates is not particularly limited, but is usually 15% or more by volume, preferably 20% or more by volume, and more preferably 25% or more by volume relative to the total amount of the solvent in the non-aqueous electrolyte. In addition, the volume percent is usually 90% or less, preferably 85% or less, and more preferably 80% or less. By making the content of the linear carbonates within the above ranges, it is easy to make the viscosity of the non-aqueous electrolyte in an appropriate range, suppress the decrease in ion conductivity, and thus contribute to making the output characteristics of the non-aqueous electrolyte battery reach a good range. When two or more linear carbonates are used in combination, the total amount of the linear carbonates needs to satisfy the above ranges.

In some embodiments, linear carbonates having fluorine atoms (hereinafter simply referred to as "fluorinated linear carbonates") may further be preferably used. The number of fluorine atoms in the fluorinated linear carbonates is not particularly limited as long as it is 1 or more, but is usually 6 or less, and preferably 4 or less. When the fluorinated linear carbonates have a plurality of fluorine atoms, the fluorine atoms may be bonded to the same carbon or to different carbons. Examples of the fluorinated linear carbonates include fluorinated dimethyl carbonate derivatives, fluorinated ethyl methyl carbonate derivatives, and fluorinated diethyl carbonate derivatives.

The carboxylate solvent includes cyclic carboxylates and/or linear carbonates. Examples of the cyclic carboxylates include one or more of γ-butyrolactone, γ-valerolactone, and δ-valerolactone. Examples of the linear carbonates include one or more of methyl acetate (MA), ethyl acetate (EA), propyl acetate (EP), butyl acetate, propyl propionate (PP), and butyl propionate.

In some embodiments, the sulfone solvent includes cyclic sulfones and linear sulfones. Preferably, in the case of the cyclic sulfones, they usually have 3 to 6 carbon atoms, and preferably 3 to 5 carbon atoms. In the case of the linear sulfones, they are usually a compound having 2 to 6 carbon atoms, and preferably a compound having 2 to 5 carbon atoms. The addition amount of the sulfone solvent is not particularly limited, and it is arbitrary within a range of not significantly destroying the effect of the lithium-ion battery in the present disclosure. With respect to the total amount of the solvent in the non-aqueous electrolyte, the volume percent of the sulfone solvent is usually 0.3% or more, preferably 0.5% or more, more preferably 1% or more, in addition, usually 40% or less, preferably 35% or less, and more preferably 30% or less. When using two or more sulfone solvents in combination, the total amount of the sulfone solvents needs to satisfy the above ranges. When the addition amount of the sulfone solvent is within the above ranges, an electrolyte having excellent high-temperature storage stability tends to be obtained.

In preferred embodiments, the non-aqueous organic solvent is a mixture of cyclic carbonates and linear carbonates.

In some embodiments, the non-aqueous electrolyte further includes lithium salts including one or more of $LiPF_6$, LiBOB, LiDFOB, $LiPO_2F_2$, $LiBF_4$, $LiSbF_6$, $LiAsF_6$, $LiN(SO_2CF_3)_2$, $LiN(SO_2C_2F_5)_2$, $LiC(SO_2CF_3)_3$, $LiN(SO_2F)_2$, $LiClO_4$, $LiAlCl_4$, $LiCF_3SO_3$, $Li_2B_{10}Cl_{10}$, and lithium salts of lower aliphatic carboxylates.

In preferred embodiments, the lithium salts include $LiPF_6$ and auxiliary lithium salts, and the auxiliary lithium salts include one or more of LiBOB, LiDFOB, $LiPO_2F_2$, $LiBF_4$, $LiSbF_6$, $LiAsF_6$, $LiN(SO_2CF_3)_2$, $LiN(SO_2C_2F_5)_2$, $LiC(SO_2CF_3)_3$, $LiN(SO_2F)_2$, $LiClO_4$, $LiAlCl_4$, $LiCF_3SO_3$, $Li_2B_{10}Cl_{10}$, and lithium salts of lower aliphatic carboxylates.

Under the above conditions, adding $LiPF_6$ as the main lithium salt in the non-aqueous electrolyte in combination with the above-mentioned auxiliary lithium salts can further improve the thermal shock resistance of the battery. It is presumed that the compound represented by the formula I contained in the positive electrode is dissolved in a small amount in the non-aqueous electrolyte, and the combination with the above lithium salts has the effect of improving the stability of the non-aqueous electrolyte and avoiding the decomposition of the non-aqueous electrolyte to produce a gas.

In some embodiments, in the non-aqueous electrolyte, a mass percent content of the $LiPF_6$ is from 5% to 20%, and a mass percent content of the auxiliary lithium salts is from 0.05% to 5%.

In some embodiments, the non-aqueous electrolyte further includes an additive including at least one of a cyclic sulfate ester compound, a sultone ester compound, a cyclic carbonate ester compound, an unsaturated phosphate ester compound, and a nitrile compound.

Preferably, the cyclic sulfate ester compound is selected from at least one of vinyl sulfate, propylene sulfate, or methyl vinyl sulfate. The sultone ester compound is selected from at least one of 1,3-propane sultone, 1,4-butane sultone or 1,3-propene sultone. The cyclic carbonate ester compound is selected from at least one of vinylene carbonate, vinyl ethylene carbonate, fluoroethylene carbonate or a compound represented by formula 2,

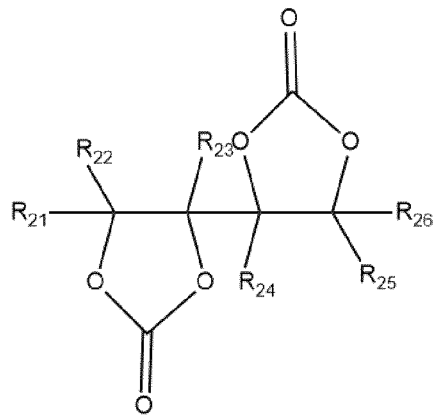

Formula 2

where in the formula 2, $R_{21}$, $R_{22}$, $R_{23}$, $R_{24}$, $R_{25}$, and $R_{26}$ are each independently selected from one of a hydrogen atom, a halogen atom, and a C1 to C5 group.

The unsaturated phosphate ester compound is selected from at least one of compounds represented by formula 3:

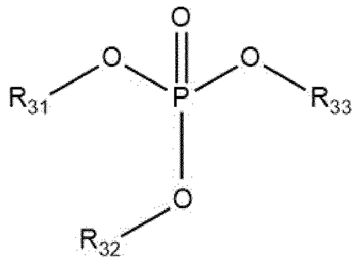

Formula 3

where in the formula 3, $R_{31}$, $R_{32}$ and $R_{33}$ are each independently selected from a C1 to C5 saturated hydrocarbonyl group, an unsaturated hydrocarbonyl group, a halogenated hydrocarbonyl group, and $-Si(C_mH_{2m+1})_3$, where m is a natural number from 1 to 3, and at least one of $R_{31}$, $R_{32}$ and $R_{33}$ is the unsaturated hydrocarbonyl group.

In preferred embodiments, the unsaturated phosphate ester compound may be at least one of tripropargyl phosphate, dipropargyl methyl phosphate, dipropargyl ethyl phosphate, dipropargyl propyl phosphate, dipropargyl trifluoromethyl phosphate, dipropargyl 2,2,2-trifluoroethyl phosphate, dipropargyl 3,3,3-trifluoropropyl phosphate, dipropargyl hexafluoroisopropyl phosphate, triallyl phosphate, diallyl methyl phosphate, diallyl ethyl phosphate, diallyl propyl phosphate, diallyl trifluoromethyl phosphate, diallyl 2,2,2-trifluoroethyl phosphate, diallyl 3,3,3-trifluoropropyl phosphate, and diallyl hexafluoroisopropyl phosphate.

The nitrile compound includes one or more of succinonitrile, glutaronitrile, ethylene glycol bis(propionitrile) ether, hexanetrinitrile, adiponitrile, pimelonitrile, suberonitrile, azelanitrile, and sebaconitrile.

In some other embodiments, the additive may further include other additives that can improve battery performance: for example, additives that improve battery safety performance, such as fluorophosphate esters, cyclophosphazene, and other flame retardant additives; or tert-amylbenzene, tert-butylbenzene and other anti-overcharge additives.

It should be noted that, unless otherwise specified, in general, the addition amount of any optional substance in the additive in the non-aqueous electrolyte is 10% or less, for example, the additive is added in an amount ranging from 0.05 to 10% in the non-aqueous electrolyte. Preferably, the addition amount is from 0.1 to 5%, and more preferably, the addition amount is from 0.1% to 2%. Specifically, the addition amount of any optional substance in the additive can be 0.05%, 0.08%, 0.1%, 0.5%, 0.8%, 1%, 1.2%, 1.5%, 1.8%, 2%, 2.2%, 2.5%, 2.8%, 3%, 3.2%, 3.5%, 3.8%, 4%, 4.5%, 5%, 5.5%, 6%, 6.5%, 7%, 7.5%, 7.8%, 8%, 8.5%, 9%, 9.5%, or 10%.

In some embodiments, when the additive is selected from fluoroethylene carbonate, with a total mass of the non-aqueous electrolyte being 100%, the addition amount of fluoroethylene carbonate is from 0.05% to 30%.

In some embodiments, the negative electrode sheet includes a negative electrode material layer including a negative electrode active material. The negative electrode active material is selected from at least one of a silicon-based negative electrode, a carbon-based negative electrode, a lithium-based negative electrode, and a tin-based negative electrode.

The silicon-based negative electrode includes one or more of silicon materials, silicon oxides, silicon-carbon composite materials, and silicon alloy materials. The carbon-based negative electrode includes one or more of graphite, hard carbon, soft carbon, graphene, and intermediate phase carbon microspheres. The lithium-based negative electrode includes one or more of metal lithium or a lithium alloy. The lithium alloy may specifically be at least one of a lithium-silicon alloy, a lithium-sodium alloy, a lithium-potassium alloy, a lithium-aluminum alloy, a lithium-tin alloy and a lithium-indium alloy. The tin-based negative electrode includes one or more of tin, tin carbon, tin oxide, and tin metal compounds.

In some embodiments, the negative electrode material layer further includes a negative electrode binder and a negative electrode conductive agent. The negative electrode active material, the negative electrode binder and the negative electrode conductive agent are blended to obtain the negative electrode material layer.

The selectable compounds of the negative electrode binder and the negative electrode conductive agent are the same as those of the positive electrode binder and the positive electrode conductive agent respectively, and will not be repeated here.

In some embodiments, the negative electrode sheet further includes a negative electrode current collector, and the negative electrode material layer covers a surface of the negative electrode current collector.

The negative electrode current collector is selected from metal materials that can conduct electrons. Preferably, the negative electrode current collector includes one or more of Al, Ni, tin, copper, and stainless steel. In more preferred embodiments, the negative electrode current collector is selected from copper foil.

In some embodiments, the lithium-ion battery further includes a separator, and the separator is located between the positive electrode sheet and the negative electrode sheet.

The separator can be an existing conventional separator, and can be a polymer separator, non-woven fabric and so on, including but not limited to single-layer PP (polypropylene), single-layer PE (polyethylene), double-layer PP/PE, double-layer PP /PP and three-layer PP/PE/PP separators, and the like.

The present disclosure is further illustrated by way of examples below.

The compounds involved in the following Examples and Comparative Examples are shown in Table 1 below.

Table 1

| Compound 1 | Compound 2 | Compound 3 |
|---|---|---|
| 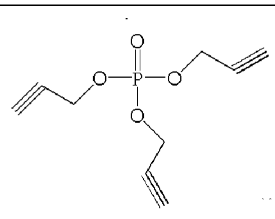 | 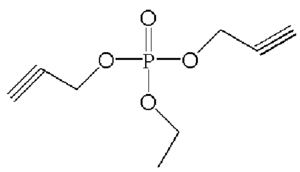 | 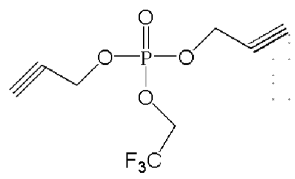 |
| Compound 4 | Compound 5 | Compound 6 |
| 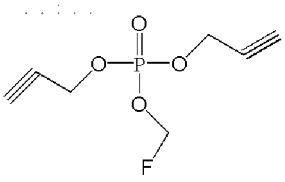 | 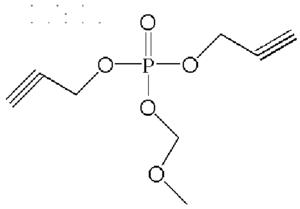 | 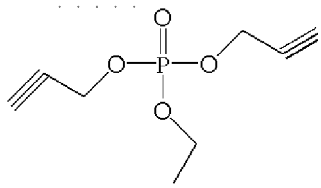 |

Table 2 Design of parameters of Examples and Comparative Examples

| Examples/ Comparative Examples | Positive electrode sheet | | | | | | | |
|---|---|---|---|---|---|---|---|---|
| | Potential of positive electrode sheet relative to metal lithium (V) | Positive electrode active material matrix | Compound of Formula I | Content m of compound of formula I (ppm) | Doped and/or coated metal elements | Total content n of doped and/or coated metal elements (ppm) | Compacted density k of positive electrode material layer (g/cm$^3$) | (m+n) / 100k |
| Example 1 | 4.40 | $LiNi_{0.5}Co_{0.2}Mn_{0.3}O_2$ | Compound 1 | 50 | W,Zr,Ti | 50 | 3.3 | 0.30 |
| Example 2 | 4.40 | $LiNi_{0.5}Co_{0.2}Mn_{0.3}O_2$ | Compound 1 | 50 | W,Zr,Ti | 100 | 3.2 | 0.47 |
| Example 3 | 4.40 | $LiNi_{0.5}Co_{0.2}Mn_{0.3}O_2$ | Compound 1 | 50 | W,Zr,Ti | 150 | 3.2 | 0.63 |
| Example 4 | 4.40 | $LiNi_{0.5}Co_{0.2}Mn_{0.3}O_2$ | Compound 1 | 50 | W,Zr,Ti | 500 | 3.2 | 1.72 |
| Example 5 | 4.40 | $LiNi_{0.5}Co_{0.2}Mn_{0.3}O_2$ | Compound 1 | 100 | W,Zr,Ti | 500 | 3.2 | 1.88 |
| Example 6 | 4.40 | $LiNi_{0.5}Co_{0.2}Mn_{0.3}O_2$ | Compound 1 | 200 | W,Zr,Ti | 600 | 3.6 | 2.22 |
| Example 7 | 4.40 | $LiNi_{0.5}Co_{0.2}Mn_{0.3}O_2$ | Compound 1 | 200 | W,Zr,Ti | 600 | 2.8 | 2.86 |
| Example 8 | 4.40 | $LiNi_{0.5}Co_{0.2}Mn_{0.3}O_2$ | Compound 1 | 500 | W,Zr,Ti | 800 | 3.8 | 3.42 |
| Example 9 | 4.40 | $LiNi_{0.5}Co_{0.2}Mn_{0.3}O_2$ | Compound 1 | 500 | W,Zr,Ti | 1000 | 3.6 | 4.17 |
| Example 10 | 4.40 | $LiNi_{0.5}Co_{0.2}Mn_{0.3}O_2$ | Compound 1 | 500 | W,Zr,Ti | 1000 | 3 | 5.00 |
| Example 11 | 4.40 | $LiNi_{0.5}Co_{0.2}Mn_{0.3}O_2$ | Compound 1 | 1000 | W,Zr,Ti | 1200 | 3.5 | 6.29 |
| Example 12 | 4.40 | $LiNi_{0.5}Co_{0.2}Mn_{0.3}O_2$ | Compound 1 | 1500 | W,Zr,Ti | 1500 | 3.6 | 8.33 |

(continued)

| Examples/ Comparative Examples | Positive electrode sheet | | | | | | | |
|---|---|---|---|---|---|---|---|---|
| | Potential of positive electrode sheet relative to metal lithium (V) | Positive electrode active material matrix | Compound of Formula I | Content m of compound of formula I (ppm) | Doped and/or coated metal elements | Total content n of doped and/or coated metal elements (ppm) | Compacted density k of positive electrode material layer (g/cm$^3$) | (m+n) / 100k |
| Example 13 | 4.40 | $LiNi_{0.5}Co_{0.2}Mn_{0.3}O_2$ | Compound 1 | 1800 | W,Zr,Ti | 1700 | 3.7 | 9.46 |
| Example 14 | 4.40 | $LiNi_{0.5}Co_{0.2}Mn_{0.3}O_2$ | Compound 1 | 2000 | W,Zr,Ti | 2000 | 3.5 | 11.43 |
| Example 15 | 4.40 | $LiNi_{0.5}Co_{0.2}Mn_{0.3}O_2$ | Compound 1 | 2500 | W,Zr,Ti | 2200 | 3.6 | 13.06 |
| Example 16 | 4.40 | $LiNi_{0.5}Co_{0.2}Mn_{0.3}O_2$ | Compound 1 | 2500 | W,Zr,Ti | 2400 | 3 | 16.33 |
| Example 17 | 4.40 | $LiNi_{0.5}Co_{0.2}Mn_{0.3}O_2$ | Compound 1 | 2700 | W,Zr,Ti | 3000 | 3.3 | 17.27 |
| Example 18 | 4.40 | $LiNi_{0.5}Co_{0.2}Mn_{0.3}O_2$ | Compound 1 | 3000 | W,Zr,Ti | 3000 | 3.6 | 16.67 |
| Example 19 | 4.40 | $LiNi_{0.5}Co_{0.2}Mn_{0.3}O_2$ | Compound 1 | 3000 | W,Zr,Ti | 3000 | 3 | 20.00 |
| Example 20 | 4.40 | $LiNi_{0.5}Co_{0.2}Mn_{0.3}O_2$ | Compound 1 | 3000 | W,Zr,Ti | 800 | 3.6 | 10.56 |
| Example 21 | 4.40 | $LiNi_{0.5}Co_{0.2}Mn_{0.3}O_2$ | Compound 1 | 3000 | W,Zr,Ti | 800 | 3 | 12.67 |
| Example 22 | 4.40 | $LiNi_{0.5}Co_{0.2}Mn_{0.3}O_2$ | Compound 1 | 3200 | W,Zr,Ti | 1000 | 3.4 | 12.35 |
| Example 23 | 4.40 | $LiNi_{0.5}Co_{0.2}Mn_{0.3}O_2$ | Compound 1 | 3200 | W,Zr,Ti | 4000 | 2.8 | 25.71 |
| Example 24 | 4.40 | $LiNi_{0.5}Co_{0.2}Mn_{0.3}O_2$ | Compound 1 | 3500 | W,Zr,Ti | 4500 | 3.3 | 24.24 |

(continued)

| Examples/ Comparative Examples | Positive electrode sheet | | | | | | | |
|---|---|---|---|---|---|---|---|---|
| | Potential of positive electrode sheet relative to metal lithium (V) | Positive electrode active material matrix | Compound of Formula I | Content m of compound of formula I (ppm) | Doped and/or coated metal elements | Total content n of doped and/or coated metal elements (ppm) | Compacted density k of positive electrode material layer ($g/cm^3$) | (m+n) / 100k |
| Example 25 | 4.40 | $LiNi_{0.5}Co_{0.2}Mn_{0.3}O_2$ | Compound 1 | 4000 | W,Zr,Ti | 5000 | 3.6 | 25.00 |
| Example 26 | 4.40 | $LiNi_{0.5}Co_{0.2}Mn_{0.3}O_2$ | Compound 1 | 4500 | W,Zr,Ti | 5500 | 2.8 | 35.71 |
| Example 27 | 4.40 | $LiNi_{0.5}Co_{0.2}Mn_{0.3}O_2$ | Compound 1 | 4500 | W,Zr,Ti | 6000 | 2.9 | 36.21 |
| Example 28 | 4.40 | $LiNi_{0.5}Co_{0.2}Mn_{0.3}O_2$ | Compound 1 | 5000 | W,Zr,Ti | 7000 | 3 | 40.00 |
| Example 29 | 4.40 | $LiNi_{0.5}Co_{0.2}Mn_{0.3}O_2$ | Compound 1 | 5000 | W | 7500 | 3 | 41.67 |
| Example 30 | 4.40 | $LiNi_{0.5}Co_{0.2}Mn_{0.3}O_2$ | Compound 1 | 5000 | Mg | 800 | 3.6 | 16.11 |
| Example 31 | 4.40 | $LiNi_{0.5}Co_{0.2}Mn_{0.3}O_2$ | Compound 1 | 5000 | Ca | 1200 | 3.6 | 17.22 |
| Example 32 | 4.40 | $LiNi_{0.5}Co_{0.2}Mn_{0.3}O_2$ | Compound 1 | 5500 | Fe | 1500 | 3.5 | 20.00 |
| Example 33 | 4.40 | $LiNi_{0.5}Co_{0.2}Mn_{0.3}O_2$ | Compound 1 | 6000 | Al | 1000 | 3.3 | 21.21 |
| Example 34 | 4.40 | $LiNi_{0.5}Co_{0.2}Mn_{0.3}O_2$ | Compound 1 | 6000 | W | 1500 | 3 | 25.00 |
| Example 35 | 4.40 | $LiNi_{0.5}Co_{0.2}Mn_{0.3}O_2$ | Compound 1 | 6000 | Zr | 1700 | 3 | 25.67 |
| Example 36 | 4.40 | $LiNi_{0.5}Co_{0.2}Mn_{0.3}O_2$ | Compound 1 | 7000 | Ce | 7000 | 3.6 | 38.89 |

(continued)

| Examples/ Comparative Examples | Positive electrode sheet | | | | | | | |
|---|---|---|---|---|---|---|---|---|
| | Potential of positive electrode sheet relative to metal lithium (V) | Positive electrode active material matrix | Compound of Formula I | Content m of compound of formula I (ppm) | Doped and/or coated metal elements | Total content n of doped and/or coated metal elements (ppm) | Compacted density k of positive electrode material layer (g/cm$^3$) | (m+n) / 100k |
| Example 37 | 4.40 | $LiNi_{0.5}Co_{0.2}Mn_{0.3}O_2$ | Compound 1 | 8000 | Zn | 6000 | 3.3 | 42.42 |
| Example 38 | 4.40 | $LiNi_{0.5}Co_{0.2}Mn_{0.3}O_2$ | Compound 1 | 8000 | W,Zr,Ti | 8000 | 3.3 | 48.48 |
| Example 39 | 4.40 | $LiNi_{0.5}Co_{0.2}Mn_{0.3}O_2$ | Compound 1 | 8000 | W,Zr,Ti | 8000 | 2.8 | 57.14 |
| Example 40 | 4.40 | $LiNi_{0.5}Co_{0.2}Mn_{0.3}O_2$ | Compound 1 | 10000 | W,Zr,Ti | 10000 | 3.8 | 52.63 |
| Example 41 | 4.40 | $LiNi_{0.5}Co_{0.2}Mn_{0.3}O_2$ | Compound 1 | 10000 | W,Zr,Ti | 10000 | 3.4 | 58.82 |
| Example 42 | 4.45 | $LiNi_{0.5}Co_{0.2}Mn_{0.3}O_2$ | Compound 1 | 3200 | W,Zr,Ti | 1000 | 3.4 | 12.35 |
| Example 43 | 4.50 | $LiNi_{0.5}Co_{0.2}Mn_{0.3}O_2$ | Compound 1 | 3200 | W,Zr,Ti | 1000 | 3.4 | 12.35 |
| Example 44 | 4.40 | $LiNi_{0.5}Co_{0.2}Mn_{0.3}O_2$ | Compound 2 | 3200 | W,Zr,Ti | 1000 | 3.4 | 12.35 |
| Example 45 | 4.40 | $LiNi_{0.5}Co_{0.2}Mn_{0.3}O_2$ | Compound 3 | 3200 | W,Zr,Ti | 1000 | 3.4 | 12.35 |
| Example 46 | 4.40 | $LiNi_{0.5}Co_{0.2}Mn_{0.3}O_2$ | Compound 4 | 3200 | W,Zr,Ti | 1000 | 3.4 | 12.35 |
| Example 47 | 4.40 | $LiNi_{0.5}Co_{0.2}Mn_{0.3}O_2$ | Compound 5 | 3200 | W,Zr,Ti | 1000 | 3.4 | 12.35 |
| Example 48 | 4.40 | $LiNi_{0.5}Co_{0.2}Mn_{0.3}O_2$ | Compound 6 | 3200 | W,Zr,Ti | 1000 | 3.4 | 12.35 |

(continued)

| Examples/ Comparative Examples | Positive electrode sheet | | | | | | | |
|---|---|---|---|---|---|---|---|---|
| | Potential of positive electrode sheet relative to metal lithium (V) | Positive electrode active material matrix | Compound of Formula I | Content m of compound of formula I (ppm) | Doped and/or coated metal elements | Total content n of doped and/or coated metal elements (ppm) | Compacted density k of positive electrode material layer (g/cm$^3$) | (m+n) / 100k |
| Example 49 | 4.35 | $LiNi_{0.6}Co_{0.2}Mn_{0.2}O_2$ | Compound 1 | 3200 | W,Zr,Ti | 1000 | 3.4 | 12.35 |
| Example 50 | 4.40 | $L_1Ni_{0.6}Co_{0.2}Mn_{0.2}O_2$ | Compound 1 | 3200 | W,Zr,Ti | 1000 | 3.4 | 12.35 |
| Example 51 | 4.45 | $L_1Ni_{0.6}Co_{0.2}Mn_{0.2}O_2$ | Compound 1 | 3200 | W,Zr,Ti | 1000 | 3.4 | 12.35 |
| Example 52 | 4.30 | $LiNi_{0.7}Co_{0.2}Mn_{0.1}O_2$ | Compound 1 | 3200 | W,Zr,Ti | 1000 | 3.4 | 12.35 |
| Example 53 | 4.35 | $LiNi_{0.7}Co_{0.2}Mn_{0.1}O_2$ | Compound 1 | 3200 | W,Zr,Ti | 1000 | 3.4 | 12.35 |
| Example 54 | 4.40 | $LiNi_{0.7}Co_{0.2}Mn_{0.1}O_2$ | Compound 1 | 3200 | W,Zr,Ti | 1000 | 3.4 | 12.35 |
| Example 55 | 4.35 | $LiMn_2O_4$ | Compound 1 | 3200 | W,Zr,Ti | 1000 | 3.4 | 12.35 |
| Example 56 | 4.40 | $LiMn_2O_4$ | Compound 1 | 3200 | W,Zr,Ti | 1000 | 3.4 | 12.35 |
| Comparative Example 1 | 4.40 | $LiNi_{0.5}Co_{0.2}Mn_{0.3}O_2$ | None | / | W,Zr,Ti | 1000 | 3.4 | / |
| Comparative Example 2 | 4.45 | $LiNi_{0.5}Co_{0.2}Mn_{0.3}O_2$ | None | / | W,Zr,Ti | 1000 | 3.4 | / |
| Comparative Example 3 | 4.50 | $LiNi_{0.5}Co_{0.2}Mn_{0.3}O_2$ | None | / | W,Zr,Ti | 1000 | 3.4 | / |
| Comparative Example 4 | 4.35 | $L_1Ni_{0.6}Co_{0.2}Mn_{0.2}O_2$ | None | / | W,Zr,Ti | 1000 | 3.4 | / |

(continued)

| Examples/ Comparative Examples | Positive electrode sheet | | | | | | | |
|---|---|---|---|---|---|---|---|---|
| | Potential of positive electrode sheet relative to metal lithium (V) | Positive electrode active material matrix | Compound of Formula I | Content m of compound of formula I (ppm) | Doped and/or coated metal elements | Total content n of doped and/or coated metal elements (ppm) | Compacted density k of positive electrode material layer (g/cm³) | (m+n) / 100k |
| Comparative Example 5 | 4.40 | $L_1Ni_{0.6}Co_{0.2}Mn_{0.2}O_2$ | None | / | W,Zr,Ti | 1000 | 3.4 | / |
| Comparative Example 6 | 4.45 | $L_1Ni_{0.6}Co_{0.2}Mn_{0.2}O_2$ | None | / | W,Zr,Ti | 1000 | 3.4 | / |
| Comparative Example 7 | 4.30 | $LiNi_{0.7}Co_{0.1}Mn_{0.2}O_2$ | None | / | W,Zr,Ti | 1000 | 3.4 | / |
| Comparative Example 8 | 4.35 | $LiNi_{0.7}Co_{0.1}Mn_{0.2}O_2$ | None | / | W,Zr,Ti | 1000 | 3.4 | / |
| Comparative Example 9 | 4.40 | $LiNi_{0.7}Co_{0.1}Mn_{0.2}O_2$ | None | / | W,Zr,Ti | 1000 | 3.4 | / |
| Comparative Example 10 | 4.35 | $LiMn_2O_4$ | None | / | W,Zr,Ti | 1000 | 3.4 | / |
| Comparative Example 11 | 4.40 | $LiMn_2O_4$ | None | / | W,Zr,Ti | 1000 | 3.4 | / |
| Comparative Example 12 | 4.40 | $LiNi_{0.5}Co_{0.2}Mn_{0.3}O_2$ | Compound 1 | 50 | W,Zr,Ti | 50 | 3.5 | 0.29 |
| Comparative Example 13 | 4.40 | $LiNi_{0.5}Co_{0.2}Mn_{0.3}O_2$ | Compound 1 | 3000 | W,Zr,Ti | 15000 | 2.8 | 64.29 |
| Comparative Example 14 | 4.40 | $LiNi_{0.5}Co_{0.2}Mn_{0.3}O_2$ | Compound 1 | 15000 | W,Zr,Ti | 8000 | 3.8 | 60.53 |
| Comparative Example 15 | 4.40 | $LiNi_{0.5}Co_{0.2}Mn_{0.3}O_2$ | Compound 1 | 10000 | W,Zr,Ti | 10000 | 3 | 66.67 |
| Comparative Example 16 | 4.40 | $LiNi_{0.5}Co_{0.2}Mn_{0.3}O_2$ | Compound 1 | 6200 | W,Zr,Ti | 6000 | 2 | 61.00 |

(continued)

| Examples/ Comparative Examples | Positive electrode sheet | | | | | | | |
|---|---|---|---|---|---|---|---|---|
| | Potential of positive electrode sheet relative to metal lithium (V) | Positive electrode active material matrix | Compound of Formula I | Content m of compound of formula I (ppm) | Doped and/or coated metal elements | Total content n of doped and/or coated metal elements (ppm) | Compacted density k of positive electrode material layer (g/cm$^3$) | (m+n) / 100k |
| Comparative Example 17 | 4.40 | $LiNi_{0.5}Co_{0.2}Mn_{0.3}O_2$ | Compound 1 | 50 | W,Zr,Ti | 50 | 4 | 0.25 |
| Comparative Example 18 | 4.40 | $LiNi_{0.5}Co_{0.2}Mn_{0.3}O_2$ | Compound 1 | 20 | W,Zr,Ti | 3000 | 3.3 | 9.15 |
| Comparative Example 19 | 4.40 | $LiNi_{0.5}Co_{0.2}Mn_{0.3}O_2$ | Compound 1 | 14000 | W,Zr,Ti | 3000 | 3.3 | 51.52 |
| Comparative Example 20 | 4.40 | $LiNi_{0.5}Co_{0.2}Mn_{0.3}O_2$ | Compound 1 | 200 | W,Zr,Ti | 20 | 3.3 | 0.67 |
| Comparative Example 21 | 4.40 | $LiNi_{0.5}Co_{0.2}Mn_{0.3}O_2$ | Compound 1 | 200 | W,Zr,Ti | 12000 | 3.3 | 36.97 |
| Comparative Example 22 | 4.40 | $LiNi_{0.5}Co_{0.2}Mn_{0.3}O_2$ | Compound 1 | 200 | W,Zr,Ti | 1000 | 2 | 6.00 |
| Comparative Example 23 | 4.40 | $LiNi_{0.5}Co_{0.2}Mn_{0.3}O_2$ | Compound 1 | 200 | W,Zr,Ti | 1000 | 4 | 3.00 |

Example 1

This example is used to illustrate the lithium-ion battery disclosed in the present disclosure and its preparation method, including the steps as follows:

1) Preparation of positive electrode sheet

Step 1: PVDF as a binder and the compound represented by the formula I shown in Table 1 were added to an NMP solvent, and stirred thoroughly and uniformly to obtain a PVDF glue solution added with the compound represented by the formula I.
Step 2: A conductive agent (super P + CNT) was added to the PVDF glue solution, and stirred thoroughly and uniformly.
Step 3: The surface-doped or coated positive electrode active material shown in Table 2 was subsequently added, and stirred thoroughly and uniformly, finally obtaining the desired positive electrode slurry.
Step 4: The prepared positive electrode slurry was evenly coated on the positive electrode current collector (for example, aluminum foil), and positive electrode sheets with different compacted densities were obtained by controlling coating parameters, drying, rolling parameters, die-cutting or slitting.

The mass percent content m of the compound represented by the formula I in the positive electrode material layer, the total content n of metal elements doped in and/or coated on the positive electrode material in the positive electrode active layer, and the compacted density k of the positive electrode active material layer are shown in Table 2.
2) Preparation of negative electrode sheet

Step 1: Materials were weighed according to a ratio of graphite (Shanghai Shanshan, FSN-1): conductive carbon (super P): sodium carboxymethyl cellulose (CMC): styrene-butadiene rubber (SBR) = 96.3:1.0:1.2:1.5 (mass ratio) for the negative electrode sheet.
Step 2: Firstly, CMC was added into pure water at a solid content of 1.5%, and stirred thoroughly and uniformly (for example, for a stirring time period of 120 min) to prepare a transparent CMC glue solution.
Step 3: Conductive carbon (super P) was added to the CMC glue solution, and stirred thoroughly and uniformly (for example, for a stirring time period of 90 min) to prepare a conductive glue solution.
Step 4: Graphite was subsequently added, and stirred thoroughly and uniformly, finally obtaining the required negative electrode slurry.
Step 5: The prepared negative electrode slurry was evenly coated on the copper foil, and the negative electrode sheet was obtained by drying, rolling, die-cutting or slitting.

3) Preparation of non-aqueous electrolyte
Ethylene carbonate (EC), diethyl carbonate (DEC) and ethyl methyl carbonate (EMC) were mixed according to a mass ratio of EC:DEC:EMC = 1:1:1. Then, lithium hexafluorophosphate ($LiPF_6$) was added to a molar concentration of 1 mol/L, and then 1% $LiPO_2F_2$ was added.
4) Preparation of lithium-ion battery cell
The above-mentioned prepared positive electrode sheet and the above-mentioned negative electrode sheet were assembled into a laminated soft-packed battery cell.
5) Injection and formation of battery cell

In a glove box with a dew point controlled at -40°C or less, the above-prepared electrolyte was injected into the battery cell, sealed under vacuum, and subjected to standing for 24 hours. Then, the normal formation of a first charging is performed according to the following steps: charging at a constant current of 0.05 C for 180 min, charging at a constant current of 0.2 C to 3.95 V, second sealing under vacuum, and then further charging at a constant current of 0.2 C to the cut-off voltage 4.35 V of the battery. At this time, the negative electrode graphite was in a state of completely intercalating lithium, and the potential relative to lithium was about 0.05 V At this time, the potential of the positive electrode sheet relative to metal lithium is 4.40 V After standing at room temperature for 24 hours, it was discharged to 3.0 V at a constant current of 0.2 C.

Examples 2 to 56

Examples 2 to 56 are used to illustrate the lithium-ion battery disclosed in the present disclosure and its preparation method, including most of the operation steps in Example 1, with the exceptions as follows: the positive electrode

sheet components and electrolyte additive components shown in Table 2 are used.

Comparative Examples 1 to 23

Comparative Examples 1 to 23 are used to comparatively illustrate the lithium-ion battery disclosed in the present disclosure and its preparation method, including most of the operating steps in Example 1, with the exceptions as follows: the positive electrode sheet components and electrolyte additive components shown in Table 2 are used.

A plurality of identical lithium-ion batteries were prepared for each Example and Comparative Example to facilitate testing of the battery performance.

Performance testing

The performance of the lithium-ion batteries prepared above is tested as follows:

1) Testing of a potential of the positive electrode sheet relative to metal lithium: The battery was charged to the cut-off voltage. The battery was dissembled in a glove box, and the positive electrode sheet and the negative electrode sheet of the battery were separated. The positive electrode sheet was cut into a disc with a diameter of 15 mm, which was assembled with a lithium sheet with a diameter of 14 mm to form a button battery. Then, the open circuit voltage of the button battery was tested. At this time, the open circuit voltage is the potential of the positive electrode sheet relative to the metal lithium.

2) Testing of high-temperature cycle performance: At 45°C, the formed battery was charged to the cut-off voltage at a 1 C constant current and a constant voltage, then charged at a constant voltage until the current drops to 0.05 C, and then discharged at a 1 C constant current to 3.0 V, so as to circulate in this way for 1500 cycles. The discharge capacity and discharge DCIR for the first cycle, and the discharge capacity and discharge DCIR for the 1500$^{th}$ cycle were recorded.

The capacity retention rate and DCIR increase rate of the high-temperature cycle were calculated according to the following formula:

battery cycle capacity retention rate = discharge capacity for the 1500$^{th}$ cycle/discharge capacity for the first cycle × 100%;

battery cycle DCIR increase rate (%) = (discharge DCIR for the 1500$^{th}$ cycle - discharge DCIR for the first cycle)/discharge DCIR for the first cycle × 100%.

3) Capacity retention rate of the batteries after storage at a high temperature of 60°C for 90 days: The batteries were charged at a 1 C constant current and a constant voltage to the cut-off voltage, then charged at a constant voltage until the current drops to 0.05 C, and then discharged at a 1 C constant current to 3.0 V The initial discharge capacity and discharge DCIR of the batteries were measured. Then, the batteries were fully charged and stored at 60°C for 90 days respectively, then discharged to 3 V at 1 C, and the capacity and discharge DCIR of the batteries were measured. The calculation formulas were as follows:

battery storage capacity retention rate (%) = battery discharge capacity after storage for 90 days/battery discharge capacity before storage × 100%;

battery storage DCIR increase rate (%) = (discharge DCIR after storage for 90 days - discharge DCIR before storage)/discharge DCIR before storage × 100%.

Test results obtained in Examples 1 to 43, Comparative Examples from 1 to 3, and Comparative Examples 12 to 23 are shown in Table 3.

Table 3

| Examples/ Comparative Examples | Capacity retention rate after 1500 cycles at 1C/1C at 45°C (%) | DCIR increase rate after 1500 cycles at 1C/1C at 45°C (%) | Capacity retention rate after storage at 60°C for 90 days (%) | DCIR increase rate after storage at 60°C for 90 days (%) |
|---|---|---|---|---|
| Example 1 | 80.2 | 107.4 | 81.6 | 117.5 |
| Example 2 | 81.7 | 106.2 | 83.2 | 114.4 |
| Example 3 | 87.1 | 79.3 | 87 | 88.4 |
| Example 4 | 87.9 | 78.7 | 87.5 | 86.5 |
| Example 5 | 88.3 | 76.4 | 88 | 86 |
| Example 6 | 88.3 | 76.5 | 88.1 | 86.1 |
| Example 7 | 87.6 | 82.4 | 87.2 | 88.6 |
| Example 8 | 87.3 | 84.4 | 86.9 | 89.6 |
| Example 9 | 88.6 | 75.4 | 88.4 | 85.6 |
| Example 10 | 89.1 | 73.4 | 89.4 | 81.6 |
| Example 11 | 89.4 | 73 | 89.9 | 78.9 |
| Example 12 | 89.6 | 71 | 90.1 | 75.4 |
| Example 13 | 89.4 | 73 | 89.9 | 76.9 |
| Example 14 | 89.7 | 71.9 | 90.3 | 74.3 |
| Example 15 | 90.2 | 69.5 | 90.2 | 70.1 |
| Example 16 | 90.6 | 67.5 | 90.4 | 68.9 |
| Example 17 | 91 | 65.5 | 90.5 | 67.2 |
| Example 18 | 91.6 | 63.5 | 90.6 | 66.1 |
| Example 19 | 91.9 | 60.1 | 91 | 63.1 |
| Example 20 | 93.3 | 52.2 | 91.2 | 60.4 |
| Example 21 | 94.8 | 48.2 | 92 | 58.3 |
| Example 22 | 95 | 46.6 | 92. 9 | 56.5 |
| Example 23 | 82.2 | 101 | 83.6 | 103.1 |
| Example 24 | 87.4 | 80.2 | 87.7 | 85.4 |
| Example 25 | 87.2 | 81.3 | 87.2 | 89.4 |
| Example 26 | 82 | 104 | 80.6 | 110.1 |
| Example 27 | 81.7 | 103.4 | 80.3 | 113.6 |
| Example 28 | 82.2 | 104 | 80.6 | 112.8 |
| Example 29 | 82.1 | 104 | 80.9 | 108.1 |
| Example 30 | 89.8 | 70.7 | 90.4 | 73.6 |
| Example 31 | 90.2 | 68.9 | 90.8 | 70.1 |
| Example 32 | 89.2 | 73.9 | 90.1 | 74.3 |
| Example 33 | 89.5 | 72.4 | 90.4 | 72.7 |
| Example 34 | 90 | 69.2 | 90.7 | 71.2 |
| Example 35 | 82.3 | 101.1 | 84.1 | 104.2 |
| Example 36 | 82 | 105.3 | 83.3 | 109.1 |

(continued)

| Examples/ Comparative Examples | Capacity retention rate after 1500 cycles at 1C/1C at 45°C (%) | DCIR increase rate after 1500 cycles at 1C/1C at 45°C (%) | Capacity retention rate after storage at 60°C for 90 days (%) | DCIR increase rate after storage at 60°C for 90 days (%) |
|---|---|---|---|---|
| Example 37 | 82.2 | 102.5 | 83.8 | 106.2 |
| Example 38 | 81.8 | 103.7 | 82.2 | 112.4 |
| Example 39 | 82.8 | 99.4 | 83.2 | 107.4 |
| Example 40 | 82.3 | 101.4 | 82.8 | 110.4 |
| Example 41 | 82.6 | 100.2 | 83.1 | 106.9 |
| Example 42 | 94.7 | 47.6 | 92.9 | 58.5 |
| Example 43 | 93.4 | 49.3 | 91.8 | 60.5 |
| Comparative Example 1 | 72.3 | 150.4 | 72.1 | 240.2 |
| Comparative Example 2 | 70.4 | 156.3 | 70.3 | 257.1 |
| Comparative Example 3 | 68.4 | 162.7 | 68.1 | 280.7 |
| Comparative Example 12 | 74.9 | 140.2 | 73.2 | 200.1 |
| Comparative Example 13 | 75.1 | 137.3 | 73.7 | 198.3 |
| Comparative Example 14 | 76.4 | 134.1 | 74.3 | 190.4 |
| Comparative Example 15 | 74.3 | 138.9 | 73.4 | 200.7 |
| Comparative Example 16 | 73.3 | 136.8 | 73 | 189.2 |
| Comparative Example 17 | 70.8 | 142.7 | 72.9 | 210.2 |
| Comparative Example 18 | 71.2 | 145.3 | 68 | 283.5 |
| Comparative Example 19 | 73.5 | 135.2 | 76.8 | 140.3 |
| Comparative Example 20 | 76.2 | 130.4 | 74.2 | 187.9 |
| Comparative Example 21 | 72.1 | 150.2 | 78.1 | 120.4 |
| Comparative Example 22 | 75 | 136.2 | 72.4 | 212.1 |
| Comparative Example 23 | 65.3 | 197.2 | 67.4 | 240.3 |

As can be seen from the test results of Examples 1 to 43, Comparative Examples 1 to 3, and Comparative Examples 12 to 17, when the content m of the compound represented by the formula I in the positive electrode material layer, the total content n of the doped and coated metal elements in the positive electrode material layer, and the

compacted density k of the positive electrode material layer satisfy the limitative condition $0.3 \leq \frac{(m+n)}{100k} \leq 59$, the lithium-ion battery has higher high-temperature cycling and high-temperature storage capacity retention rates and a lower impedance increase rate. It is speculated that due to the synergistic effect of the compound represented by the formula I with the doped element of the positive electrode active material and the positive electrode compacted density, so that the positive electrode active material has a high structural stability. Therefore, side reactions between the surface of the positive electrode material layer and the non-aqueous electrolyte are significantly reduced in the battery, and the increase in the positive electrode impedance during the high-temperature cycling/storage is reduced. In particular, the high-temperature stability of lithium salts and solvents in the non-aqueous electrolyte is improved, and the high-temperature capacity retention performance of the battery can be greatly improved.

As can be seen from the test results of Examples 1 to 19, Examples 23 to 29 and Examples 36 to 41, in the positive electrode material layer, if the content of the compound represented by the formula I is too small, then its passivation effect on the positive electrode material is limited, so that the effect of improving the high-temperature performance of the battery is not apparent. Otherwise, if the content of the compound represented by the formula I is too large, then the film formed on the surface of the positive electrode active material is thicker, and the internal resistance of the battery is greater. The higher the content of doped and coated metal elements in the positive electrode material, the better the structural stability of the positive electrode material, and the better the high-temperature storage performance. However, too much coating will cause the impedance of the material to increase.

As can be seen from the test results of Comparative Examples 18 to 23, even if the content m of the compound represented by the formula I in the positive electrode material layer, the total content n of the doped and coated metal elements in the positive electrode material layer, and the compacted density k of the positive electrode material layer satisfy the condition $0.3 \leq \frac{(m+n)}{100k} \leq 59$; when the m value, the n value and the k value do not satisfy their range limits, the lithium-ion battery still does not have good electrochemical performance.

(2) Test results obtained in Examples 44 to 48 are shown in Table 4.

Table 4

| Examples/ Comparative Examples | Capacity retention rate after 1500 cycles at 1C/1C at 45°C (%) | DCIR increase rate after 1500 cycles at 1C/1C at 45°C (%) | Capacity retention rate after storage at 60°C for 90 days (%) | DCIR increase rate after storage at 60°C for 90 days (%) |
|---|---|---|---|---|
| Example 44 | 94.2 | 47.9 | 92.3 | 59.3 |
| Example 45 | 94.7 | 48.3 | 92.5 | 59.3 |
| Example 46 | 94.6 | 48.4 | 92.4 | 59.6 |
| Example 47 | 94.8 | 47.6 | 93.1 | 58.1 |
| Example 48 | 94.5 | 49.1 | 93.2 | 57.3 |

As can be seen from the test results of Examples 44 to 48, for different compounds represented by the formula I, when the content m of the compound represented by the formula I in the positive electrode material layer, the total content n of the doped and coated metal elements in the positive electrode material layer, and the compacted density k of the positive electrode material layer satisfy the preset relationship $0.3 \leq \frac{(m+n)}{100k} \leq 59$, they have a similar promotion effect on the lithium-ion battery, and all have a certain improvement effect on the high-temperature cycle performance and high-temperature storage performance of the lithium-ion battery, illustrating that the relationship provided in the present disclosure are applicable to various compounds represented by the Formula I.

(3) Test results obtained in Examples 49 to 56 and Comparative Examples 4 to 11 are shown in Table 5.

Table 5

| Examples/ Comparative examples | Capacity retention rate after 1500 cycles at 1C/1C at 45°C (%) | DCIR increase rate after 1500 cycles at 1C/1C at 45°C (%) | Capacity retention rate after storage at 60°C for 90 days (%) | DCIR increase rate after storage at 60°C for 90 days (%) |
|---|---|---|---|---|
| Example 49 | 94.2 | 51.6 | 92.3 | 63.5 |
| Example 50 | 94 | 54.4 | 91.8 | 67.3 |

(continued)

| Examples/ Comparative examples | Capacity retention rate after 1500 cycles at 1C/1C at 45°C (%) | DCIR increase rate after 1500 cycles at 1C/1C at 45°C (%) | Capacity retention rate after storage at 60°C for 90 days (%) | DCIR increase rate after storage at 60°C for 90 days (%) |
|---|---|---|---|---|
| Example 51 | 93.6 | 56.8 | 91.4 | 70.5 |
| Example 52 | 94.8 | 47.9 | 92.7 | 57.3 |
| Example 53 | 94.1 | 53.7 | 90.6 | 66.7 |
| Example 54 | 93.5 | 56.4 | 90.1 | 69.4 |
| Example 55 | 94.4 | 50.3 | 90.7 | 61.7 |
| Example 56 | 93.8 | 55.6 | 90.2 | 67.2 |
| Comparative Example 4 | 71 | 170.3 | 73.1 | 200.1 |
| Comparative Example 5 | 70.1 | 176.2 | 72 | 215.2 |
| Comparative Example 6 | 68.7 | 187.2 | 69.4 | 230.5 |
| Comparative Example 7 | 73.1 | 140.3 | 74.1 | 170.1 |
| Comparative Example 8 | 71.7 | 145.2 | 72.9 | 176.9 |
| Comparative Example 9 | 70.1 | 150.7 | 70.3 | 184.2 |
| Comparative Example 10 | 71.3 | 159.2 | 73.1 | 169.2 |
| Comparative Example 11 | 69.9 | 167.1 | 72.1 | 178.2 |

As can be seen from the test results of Examples 49 to 56 and Comparative Examples 4 to 11, when different positive electrode active materials are used, when the content m of the compound represented by the formula I in the positive electrode material layer, the total content n of the doped and coated metal elements in the positive electrode material layer, and the compacted density k of the positive electrode material layer satisfy the preset relationship $0.3 \leq \frac{(m+n)}{100k} \leq 59$, the battery also has good high-temperature cycle performance and initial capacity, which shows that the relationship provided in the present disclosure is universal for the improvement of the high-temperature performance of lithium-ion batteries using different positive electrode active materials.

The above descriptions are only preferred embodiments of the present disclosure, and are not intended to limit the present disclosure. Any modifications, equivalent replacements and improvements made within the range of spirit and principles of the present disclosure should be included in the protection scope of the present disclosure.

## Claims

**1.** A positive electrode sheet, comprising a positive electrode current collector and a positive electrode material layer formed on the positive electrode current collector, wherein the positive electrode sheet has a potential range of greater than or equal to 4.25 V with respect to metal lithium, and the positive electrode material layer comprises a positive electrode active material doped or coated with metal elements and a compound represented by Formula I:

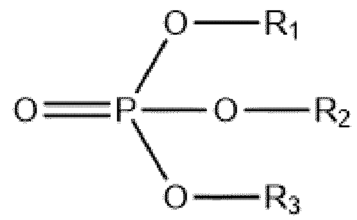

Formula I

where $R_1$, $R_2$, and $R_3$ are each independently selected from an alkyl group of 1 to 5 carbon atoms, a fluoroalkyl group of 1 to 5 carbon atoms, an ether group of 1 to 5 carbon atoms, a fluoroether group of 1 to 5 carbon atoms, an unsaturated hydrocarbonyl group of 2 to 5 carbon atoms, and at least one of $R_1$, $R_2$, and $R_3$ is the unsaturated hydrocarbonyl group of 2 to 5 carbon atoms;
wherein the positive electrode sheet satisfies following conditions:

$$0.3 \leq \frac{(m+n)}{100k} \leq 59;$$

and

$$50 \leq m \leq 10000,\ 50 \leq n \leq 10000,\ 2.8 \leq k \leq 3.8;$$

where m is a content of the compound represented by the formula I in the positive electrode material layer, in a unit of ppm;
n is a total content of the metal elements doped and coated in the positive electrode material layer, in a unit of ppm; and
k is a compacted density of the positive electrode material layer, in a unit of g/cm$^3$;
wherein a solution obtained after ultrasonically shaking the positive electrode sheet in a solvent is subjected to a liquid chromatography-mass spectrometer (LC-MS) analysis, and a characteristic peak appears in a region having a retention time of 6.5 min to 7.5 min.

2. The positive electrode sheet according to claim 1, wherein the positive electrode sheet satisfies a following condition:

$$0.6 \leq \frac{(m+n)}{100k} \leq 25.$$

3. The positive electrode sheet according to claim 1 or 2, wherein the positive electrode active material is selected from a compound represented by formula (1) and/or formula (2):

$Li_{1+x}Ni_aCo_bM^1{}_cM^2{}_{1-a-b-c}O_{2-y}A_y$ Formula (1)

$Li_{1+z}Mn_eL_{2-e}O_{4-d}B_d$ Formula (2)

where in the formula (1), $-0.1 \leq x \leq 0.2$, $0 < a < 1$, $0 < b < 0.3$, $0 < c < 0.3$, $0<a + b + c < 1$, $0 \leq y < 0.2$, $M^1$ comprises one or two of Mn and Al, $M^2$ is a doped and/or coated metal element, $M^2$ comprises one or more of W, Mg, Ti, Ca, Zr, Zn, Si, Fe and Ce, Ais a doped and/or coated non-metal element, and A comprises one or more of S, N, F, Cl, Br and I;
in the formula (2), $-0.1 \leq z \leq 0.2$, $0 < e < 2$, $0 \leq d < 1$, L is a doped and/or coated metal element, L comprises one or more of Ni, W, Mg, Ti, Ca, Zr, Zn, Si, Fe and Ce, B is a doped and/or coated non-metal element, and B comprises one or more of S, N, F, Cl, Br, and I.

4. The positive electrode sheet according to any one of claims 1 to 3, wherein the content m of the compound represented by the formula I in the positive electrode material layer is from 50 ppm to 5000 ppm.

**5.** The positive electrode sheet according to any one of claims 1 to 4, wherein the total content n of the metal elements doped and coated in the positive electrode material layer is from 100 ppm to 3000 ppm.

**6.** The positive electrode sheet according to any one of claims 1 to 5, wherein the compacted density k of the positive electrode material layer is from 3.0 to 3.6 g/$cm^3$.

**7.** The positive electrode sheet according to any one of claims 1 to 6, wherein a thickness of the positive electrode material layer on one side of the positive electrode current collector is from 80 to 200 $\mu$m, and a one-side areal density of the positive electrode material layer is from 15 to 30 mg/$cm^2$.

**8.** The positive electrode sheet according to any one of claims 1 to 7, wherein the alkyl group of 1 to 5 carbon atoms is selected from methyl, ethyl, n-propyl, isopropyl, n-butyl, isobutyl, sec-butyl, tert-butyl, n-pentyl, isopentyl, sec-pentyl, or neopentyl; the fluoroalkyl group of 1 to 5 carbon atoms is selected from a group obtained by substituting one or more hydrogen elements in the alkyl group of 1 to 5 carbon atoms with fluorine elements;

the unsaturated hydrocarbonyl group of 2 to 5 carbon atoms is selected from vinyl, propenyl, allyl, butenyl, pentenyl, methyl vinyl, methyl allyl, ethynyl, propynyl, propargyl, butynyl, or pentynyl;
the ether group of 1 to 5 carbon atoms is selected from methyl ether, ethyl ether, methyl ethyl ether, propyl ether, methyl propyl ether, or ethyl propyl ether; and/or
the fluoroether group of 1 to 5 carbon atoms is selected from fluoromethyl ether, fluoroethyl ether, fluoromethyl ethyl ether, fluoropropyl ether, fluoromethyl propyl ether, or fluoroethyl propyl ether.

**9.** The positive electrode sheet according to any one of claims 1 to 8, wherein the compound represented by the formula I is selected from at least one of tripropargyl phosphate, dipropargyl methyl phosphate, dipropargyl fluoromethyl phosphate, dipropargyl methoxymethyl phosphate, dipropargyl ethyl phosphate, dipropargyl propyl phosphate, trifluoromethyl dipropargyl phosphate, dipropargyl 2,2,2-trifluoroethyl phosphate, dipropargyl 3,3,3-trifluoropropyl phosphate, hexafluoroisopropyl dipropargyl phosphate, triallyl phosphate, diallyl methyl phosphate, diallyl ethyl phosphate, diallyl propyl phosphate, trifluoromethyl diallyl phosphate, dipropargyl methyl ether phosphate, dipropargyl fluoromethyl ether phosphate, diallyl 2,2,2-trifluoroethyl phosphate, diallyl 3,3,3-trifluoropropyl phosphate, or diallyl hexafluoroisopropyl phosphate.

**10.** A lithium-ion battery comprising a negative electrode sheet, a non-aqueous electrolyte, and the positive electrode sheet according to any one of claims 1 to 9.

**11.** The lithium-ion battery according to claim 10, wherein the non-aqueous electrolyte further comprises an additive comprising at least one of a cyclic sulfate ester compound, a sultone ester compound, a cyclic carbonate ester compound, an unsaturated phosphate ester compound, and a nitrile compound.

**12.** The lithium-ion battery according to claim 11, wherein the cyclic sulfate ester compound is selected from at least one of vinyl sulfate, propylene sulfate, or methyl vinyl sulfate;

the sultone ester compound is selected from at least one of 1,3-propane sultone, 1,4-butane sultone or 1,3-propene sultone;
the cyclic carbonate ester compound is selected from at least one of vinylene carbonate, vinyl ethylene carbonate, fluoroethylene carbonate or a compound represented by formula 2,

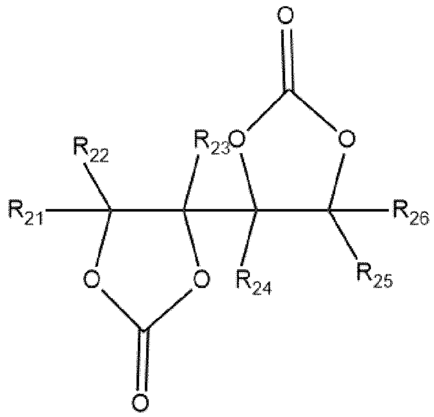

Formula 2

wherein in the formula 2, $R_{21}$, $R_{22}$, $R_{23}$, $R_{24}$, $R_{25}$, and $R_{26}$ are each independently selected from one of a hydrogen atom, a halogen atom, and a C1 to C5 group;

the unsaturated phosphate ester compound is selected from at least one of compounds represented by formula 3:

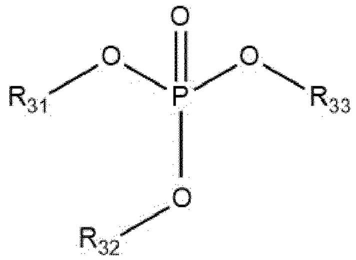

Formula 3

wherein in the formula 3, $R_{31}$, $R_{32}$ and $R_{33}$ are each independently selected from a C1 to C5 saturated hydrocarbonyl group, an unsaturated hydrocarbonyl group, a halogenated hydrocarbonyl group, and $-Si(C_mH_{2m+1})_3$, where m is a natural number from 1 to 3, and at least one of $R_{31}$, $R_{32}$ and $R_{33}$ is the unsaturated hydrocarbonyl group;

the nitrile compound comprises one or more of succinonitrile, glutaronitrile, ethylene glycol bis(propionitrile) ether, hexanetrinitrile, adiponitrile, pimelonitrile, suberonitrile, azelanitrile, and sebaconitrile.

**13.** The lithium-ion battery according to claim 11 or 12, wherein the additive is added in an amount ranging from 0.05 to 10% in the non-aqueous electrolyte.

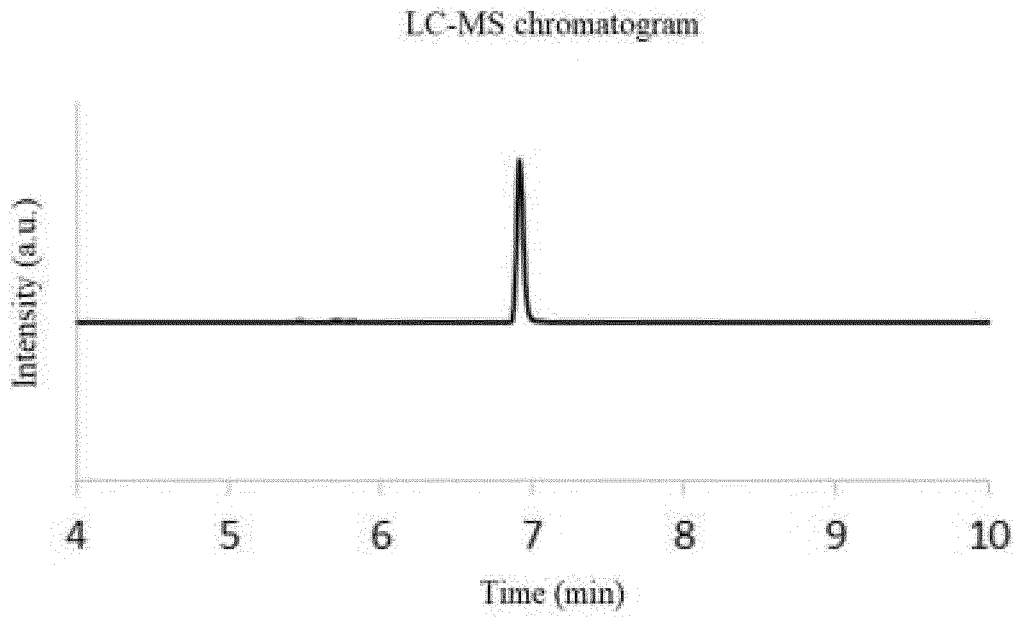


FIG. 1

**INTERNATIONAL SEARCH REPORT**

International application No.
**PCT/CN2023/080935**

**A. CLASSIFICATION OF SUBJECT MATTER**

H01M4/62(2006.01)i;H01M4/485(2010.01)i

According to International Patent Classification (IPC) or to both national classification and IPC

**B. FIELDS SEARCHED**

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNTXT, WPABSC, ENTXTC, VEN, CNKI: 电极, 正极, 阴极, 磷酸酯, 炔, 烯, 含量, 重量, 质量, 密度, electrode, positive, cathode, phosphate, content, weight, density

**C. DOCUMENTS CONSIDERED TO BE RELEVANT**

| Category* | Citation of document, with indication, where appropriate, of the relevant passages | Relevant to claim No. |
|---|---|---|
| PX | CN 114843512 A (SHENZHEN CAPCHEM TECHNOLOGY CO., LTD.) 02 August 2022 (2022-08-02)<br>description, paragraphs 20-121 | 1-13 |
| A | CN 113644275 A (SHENZHEN CAPCHEM TECHNOLOGY CO., LTD.) 12 November 2021 (2021-11-12)<br>description, paragraphs 5-15 | 1-13 |
| A | CN 108110311 A (SHENZHEN CAPCHEM TECHNOLOGY CO., LTD.) 01 June 2018 (2018-06-01)<br>entire document | 1-13 |
| A | US 2016079596 A1 (TOYOTA MOTOR CO., LTD.) 17 March 2016 (2016-03-17)<br>entire document | 1-13 |
| A | US 2020243856 A1 (PANASONIC INTELLECTUAL PROPERTY MANAGEMENT CO., LTD.) 30 July 2020 (2020-07-30)<br>entire document | 1-13 |
| A | US 2021151753 A1 (LG CHEMICAL LTD.) 20 May 2021 (2021-05-20)<br>entire document | 1-13 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 May 2023** | **12 May 2023** |
| Name and mailing address of the ISA/CN<br>**China National Intellectual Property Administration (ISA/CN)**<br>**China No. 6, Xitucheng Road, Jimenqiao, Haidian District, Beijing 100088** | Authorized officer<br><br>Telephone No. |

Form PCT/ISA/210 (second sheet) (July 2022)

**INTERNATIONAL SEARCH REPORT**
**Information on patent family members**

International application No.
**PCT/CN2023/080935**

| Patent document cited in search report | | | Publication date (day/month/year) | Patent family member(s) | | | Publication date (day/month/year) |
|---|---|---|---|---|---|---|---|
| CN | 114843512 | A | 02 August 2022 | None | | | |
| CN | 113644275 | A | 12 November 2021 | US | 11502300 | B1 | 15 November 2022 |
| CN | 108110311 | A | 01 June 2018 | JP | 2019536194 | A | 12 December 2019 |
| | | | | JP | 6904981 | B2 | 21 July 2021 |
| | | | | WO | 2018094819 | A1 | 31 May 2018 |
| | | | | US | 2019305365 | A1 | 03 October 2019 |
| | | | | US | 10923762 | B2 | 16 February 2021 |
| | | | | EP | 3547432 | A1 | 02 October 2019 |
| | | | | EP | 3547432 | A4 | 22 July 2020 |
| US | 2016079596 | A1 | 17 March 2016 | JP | 2016062644 | A | 25 April 2016 |
| | | | | JP | 6112367 | B2 | 12 April 2017 |
| | | | | DE | 102015115380 | A1 | 17 March 2016 |
| | | | | CN | 105428638 | A | 23 March 2016 |
| US | 2020243856 | A1 | 30 July 2020 | JPWO | 2019026630 | A1 | 30 July 2020 |
| | | | | WO | 2019026630 | A1 | 07 February 2019 |
| US | 2021151753 | A1 | 20 May 2021 | EP | 3706207 | A1 | 09 September 2020 |
| | | | | EP | 3706207 | A4 | 30 December 2020 |
| | | | | KR | 20190088823 | A | 29 July 2019 |
| | | | | KR | 102278999 | B1 | 20 July 2021 |
| | | | | US | 11594728 | B2 | 28 February 2023 |
| | | | | WO | 2019143214 | A1 | 25 July 2019 |
| | | | | JP | 2021506064 | A | 18 February 2021 |
| | | | | JP | 7065963 | B2 | 12 May 2022 |
| | | | | CN | 111448689 | A | 24 July 2020 |

Form PCT/ISA/210 (patent family annex) (July 2022)